# EUROPEAN PATENT APPLICATION

(11) **EP 4 151 932 A1**
(43) Date of publication of application: **22.03.2023**
(21) Application number: 21210889.8
(22) Date of filing: 26.11.2021
(51) Int. Cl.: F25D 17/02, F25D 31/00

(54) **RAPID COOLING DEVICE FOR BEVERAGES**

(30) Priority: 16.09.2021 TR 202114529
(71) Applicant: Inventia Teknoloji Ürünleri Aras. Gelis. San. Ve Tic. A.S., 34912 Pendik, Istanbul (TR)
(72) Inventor: PALANDÖKEN, UFUK, Istanbul (TR)
(74) Representative: Sach, Greg Robert

(57) **Abstract**

The invention provides the reduction of the temperature of water (17) in a water cooling chamber (11) to 1 to 2°C by circulating the refrigerant at -15 or -20°C received from a compressor (refrigerating gas compressor) (18) inside a coil heat exchanger (cooler) (19) located in the water cooling chamber (11). At the time of first and interim cooling of the device, the water (17) enters through a water inlet of the rotary solenoid twin valve (32) with a water pump (9) located inside the water cooling chamber (11) and it exits from a first water outlet of the rotary solenoid twin valve (33). During the device's cooling procedure (40-60 mins), it provides the continuous circulation of the water (17) inside the water cooling chamber (11). During the beverage cooling procedure, on the other hand, the water (17) exits from a second water outlet of the rotary solenoid twin valve (34), fills into a beverage cooling chamber (12), and thereby provides the rapid cooling of beverages (13) therein.

## Description

### TECHNICAL FIELD

The invention relates to a cooling device enabling a refrigerating gas at -15 or -20°C with the help of a compressor to reduce the temperature of the water inside a water cooling chamber down to 1-2°C by flowing within a coil heat exchanger located inside the water cooling chamber and also ensuring the transfer of the refrigerated water to a beverage cooling chamber via a water pump, wherein it enables the rapid cooling of beverages in the cooling chamber.

### BACKGROUND ART

Today, beverages are cooled in different ways. Among them, glass door refrigerators, which are used in all markets, are the most common tools. When these refrigerators are filled, the cooling procedure takes about 8-12 hours. This means a huge waste of time. Moreover, these refrigerators take up a lot of space and take too much time to cool the drinks as mentioned earlier; and when their doors are opened, they consume too much electricity in order to reach their previous temperature again since the hot ambient air enters therein.

In addition to the said refrigerators, there are also cooling devices using water across the world. In the water-cooling method, cooling is performed by way of immersion. This method forces the user to come into contact with cold water while taking out the drinks, thereby getting their hands wet. This type of cooling device is not suitable for beverages in small metal containers while it is good for large bottles.

Another method, on the other hand, includes devices with chambers consisting of sacks containing liquids such as bromyl and antifreeze that do not freeze until - 30°C. In these devices, the sacks where the product to be cooled is placed are torn over time, and the cooling liquid therein must be changed at regular intervals. The capacity is limited to 5-6 cans of beverages in this type of device.

The invention no. **"**CN105202863A**"** relates to a "rapid cooling machine for a can or bottle drink". The objective of the said invention is to eliminate the loss of cool air in refrigerators every time the door is opened and to prevent the refrigerator from using additional energy.

Document no. **"**CN102686959A**"** describes a cooling apparatus consisting of the following: a cavity to obtain a product to be cooled; a rotation means to rotate a product obtained in the cavity; and a cooling liquid supply means. The cooling liquid supply means provides the cooling liquid to the cavity; the rotation means here is adapted to rotate the product at a rotational speed of higher than 90 revolutions per minute.

Document no. **"**CN102869934A**"** describes a cooling apparatus comprising the following: a cooling apparatus comprising a cavity to obtain a product to be cooled. The apparatus also comprises rotation means to rotate a product obtained in the cavity and a coolant supply means to provide a coolant in the cavity. The apparatus further comprises means to apply a supplementary motion to the cavity.

Furthermore, in the two patents no. **"**CN102869934A**"** and **"**CN102686959A**"** in the prior art, the product to be cooled is firstly placed in the cavity, the cooling liquid is transferred to the cavity via cooling liquid supply means, and the rotation means rotates the product to complete the rapid cooling process; and the cooling liquid cannot be recycled. The cooling liquid is provided to the cavity, which is time-consuming; and being a saline solution, the cooling liquid sticks to the drink container when it is heated until -10°C, which in turn may affect drinking quality.

The Chinese patent document no. CN200910010353.9 discloses a small packaged beer and beverage rapid cooling device comprising a refrigerating unit, a cooling tank, and an electrical control part. A water circulation system is arranged between the refrigerating unit and the cooling tank. The evaporator of the refrigerating unit is connected with the cooling tank through a water inlet pipe. The cold water is recycled in the cooling tank and it flows back to the evaporator of the refrigerating unit through a return pipe and a circulating pump. The invention utilizes the refrigeration technology and heat conduction theory in order to ensure rapid cooling of the beverage by way of flow and direct contact with continuous cooling of saltwater. However, it has a complex structure, the cooling liquid should be cooled from time to time, and its cooling efficiency is low.

The patent no. **"**WO2005010448A1**"** relates to a method and device for the rapid cooling of packaged drinks. The inventive method comprises the use of an aqueous cooling liquid, normally brine, which is maintained at a low temperature in a storage tank. The said temperature can thus be as low as -20°C if the brine is sodium chloride or as low as -50°C if the brine is calcium chloride.

According to the invention, gentle jets of cooling liquid are applied to the upper surface of the container, which is placed horizontally such as to rotate around the axis thereof, for a period of time that is calculated from the initial and desired temperatures, the temperatures of the cold solution and the washing water, and the temporal coefficient of the packaged drink. In this way, under the force of gravity, the brine slides over the surface, fixed by means of surface tension, and around the whole container to the lower surface thereof, from where it falls off. As a result, most of the container is covered by brine at all times during the spraying of the liquid. Moreover, the cooling liquid can be replaced with a heating liquid for the rapid heating of packaged drinks.

In the examples above, drinks are cooled through a rotational movement in cold water. In those devices, labels of beverage containers are scratched and those that are non-cylindrical cannot be rotated. Moreover, brine is commonly used as the cooling liquid in the said inventions.

Flap valves employed in these devices lead to some problems under high pressure. At some point, they are inefficient in terms of holding high pressure. They are more suitable for materials in powder form.

In conclusion, the requirement for the elimination of shortcomings and disadvantages of embodiments and practices existing in the prior art and already being used as of today entails an improvement in the respective technical field.

### DESCRIPTION OF THE INVENTION

The present invention relates to a device providing the rapid cooling of beverages, wherein it is developed for eliminating the aforementioned disadvantages and providing new advantages to the respective technical field.

An objective of the invention is to save time by reducing the cooling duration of beverages in 200 ml to 2.5 I glass, plastic, and metal containers of different sizes from 8-12 hours to 6-10 minutes, thereby performing the required cooling procedure.

Another objective of the invention is to keep users' hands from touching the water and prevent the beverage containers to be discharged in wet condition since the water inside the cooling chamber is transferred to the water cooling chamber upon the completion of the beverage cooling procedure.

A further objective of the invention is to provide higher energy-saving compared to the conventional glass door refrigerators as the present invention provides cooling in a shorter time and has a water chamber. This in turn also reduces cost.

Another objective of the invention is to ensure very little loss of energy when the door of the device is opened and closed, thanks to the cooling system using water.

A further objective of the invention is to meet the demands of the market without having a complicated system like the inventions in the current technique.

### Drawings

The applications of the present invention that is briefly summarized above and addressed in detail below can be understood by referring to the sample applications depicted in the attached drawings of the invention. However, it must be stated that the attached drawings show only the typical applications of this invention and that since the invention allows other equally effective applications, its scope cannot be assumed to be limited.

In order to facilitate understanding, identical reference numbers are used to indicate identical elements in the figures, where possible. The shapes are not drawn to scale and can be simplified for clarity. It is believed that the elements and features of an application can be usefully incorporated into other applications without further explanation.

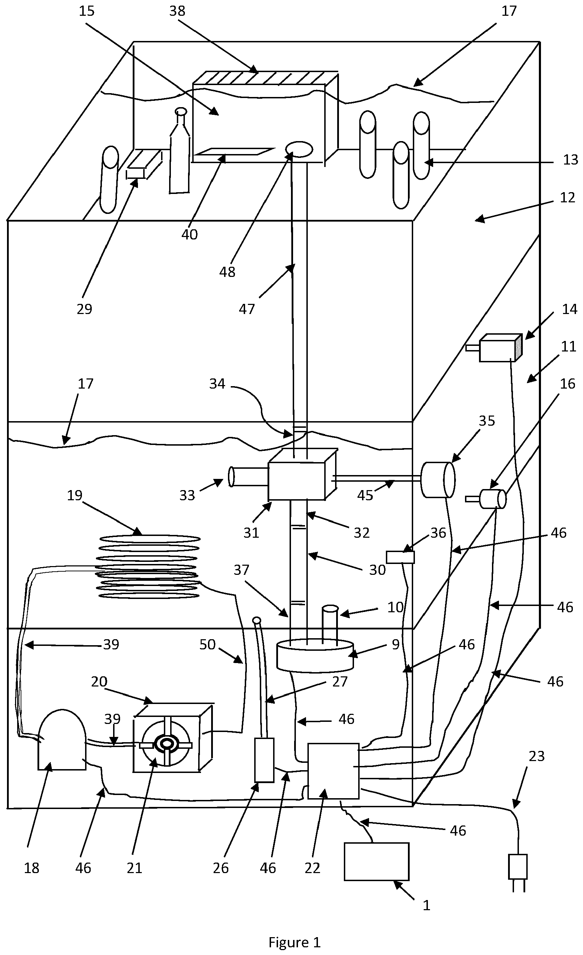

**Figure 1****:** It is a detailed drawing of the rapid cooling device.

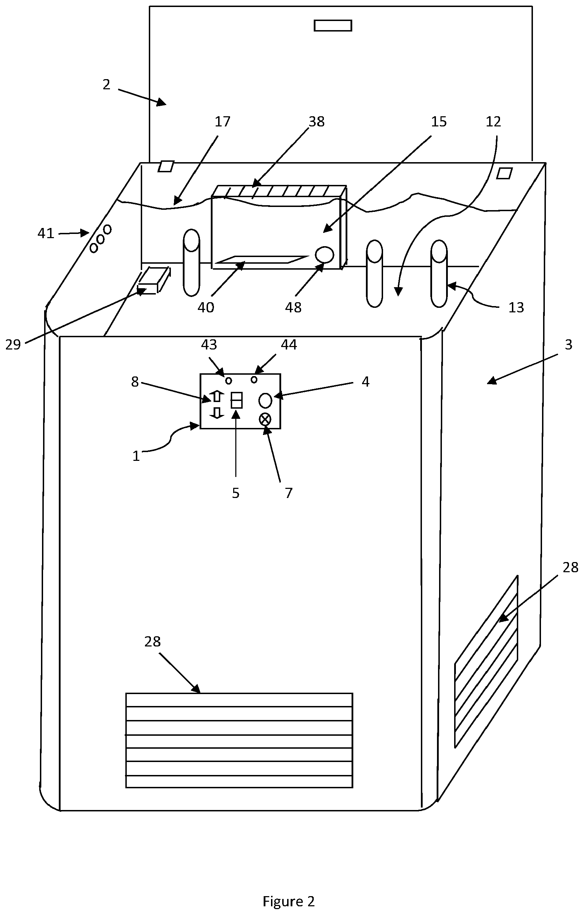

**Figure 2****:** It is a general view of the rapid cooling device.

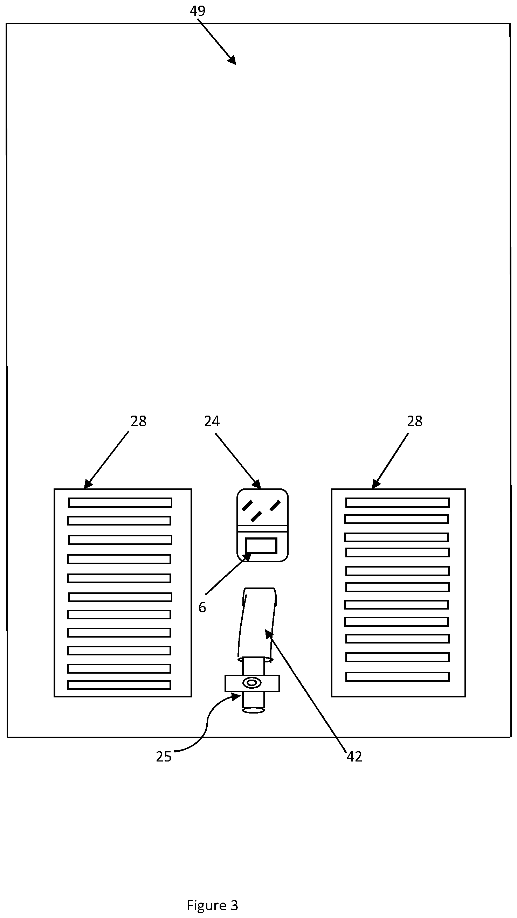

**Figure 3****:** It is a view of the back side of the rapid cooling device.

### Explanation of Details in the Drawings

Explanations of reference numbers shown in the drawings are given below.
1. Front panel
2. Top cover of the device
3. External body of the device
4. Start/stop button
5. Display
6. Turn on/off switch of the device
7. Buzzer
8. Time control button
9. Water pump
10. Water inlet of the water pump
11. Water cooling chamber
12. Beverage cooling chamber
13. Beverage
14. Water level sensor
15. Water overflow barrier
16. Temperature sensor (NTC)
17. Water
18. Compressor (refrigerating gas compressor)
19. Coil heat exchanger (cooler)
20. Condenser (heat remover)
21. Condenser fan
22. Electronic control card
23.220 V AC supply cable
24.220 V AC power socket
25. Water discharge valve
26. Ozone generator
27. Ozone carrying hose
28. Ventilation grille of the device
29. Water discharge hole of the beverage cooling chamber
30. Connector flexi hose
31. Rotary solenoid twin valve
32. Water inlet of the rotary solenoid twin valve
33. First water outlet of the rotary solenoid twin valve
34. Second water outlet of the rotary solenoid twin valve
35.12 V DC rotary solenoid (rotating solenoid)
36. UVC LED lamp (Ultraviolet C)
37. Water outlet of the water pump
38. Water filter of the water overflow barrier
39. Gas carrier copper pipe
40. Bottom water intake slit of the water overflow barrier
41. LED illumination lamp
42. Silicone water discharge hose
43. Green ready LED lamp
44. Blue water LED lamp
45. Turning shaft of the rotary solenoid
46. Voltage control cables
47. Water inlet hose of the beverage cooling chamber
48. Water outlet hole of the beverage cooling chamber
49. Back side of the device
50. Capillary tube

### DETAILED EXPLANATION OF THE INVENTION

The preferred alternatives in this detailed description of the embodiment of the present disclosure are only intended for providing a better understanding of the subject matter and should not be construed in any restrictive sense.

The invention consists of a start/stop button (4) that allows initiating and ceasing the cooling procedure; a time control button (8) that enables entering the desired time information; a display (5) that shows the countdown of cooling time; a buzzer (7) that gives a beep sound with long/short intervals in cases of readiness for or completion of the cooling procedure; a front panel (1) that includes a green ready LED lamp (43) and a blue water LED lamp (44) providing flashing; a top cover of the device (2) that provides protection from above to the elements inside the device; an external body of the device (3) that provides protection from outside to every element inside the device; a turn on/off switch of the device (6) that enables turning the device on and off; a water pump (9) that moves water (17) from a water inlet of the water pump (10) to a water outlet of the water pump (37) and through a connector flexi hose (30) to a water inlet of the rotary solenoid twin valve (32); at least one water cooling chamber (11) where water circulates; at least one beverage cooling chamber (12) that is opened by lifting the top cover of the device (2) to vertically place beverages (13) and cool them; a water level sensor (14) that determines the water level by sending a signal to an electronic control card (22) indicating that the sufficient water (17) level has been reached; a water overflow barrier (15) that allows the water (17) therein to overflow after a certain level and leak into the water cooling chamber (11); a temperature sensor (NTC) (16) that determines the time of activation and deactivation of a compressor (refrigerating gas compressor) (18) and a condenser fan (21) by sending a temperature signal to the electronic control card (22) and provides the fixation of the water (17) temperature between 1-2°C; the compressor (refrigerating gas compressor) (18) that reduces the volume of the gas (refrigerant vapor) while increasing its pressure; a coil heat exchanger (cooler) (19) that provides the cooling of water; a heat exchanger condenser (20) that condenses the refrigerant arriving in the form of hot vapor and thereby cools it; a condenser fan (21) that provides the distribution of the obtained cold air into the device; the electronic control card (22) that contains the working schedule of the device; a 220 V AC supply cable (23) that provides the transmission of electricity; a 220 V AC power socket (24); a water discharge valve (25) that is connected to a silicone water discharge hose (42) and provides the discharge of the water (17) when it is opened; an ozone generator (26) that provides water sterilization; an ozone carrying hose (27) that enables carrying the generated ozone gas to the water cooling chamber (11) and thereby ensures the disinfection of water; a ventilation grille of the device (28) that prevents the fan from causing harm to people and the surrounding environment; a water discharge hole of the beverage cooling chamber (29); a connector flexi hose (30) to which the water (17) arrives after passing through the water outlet of the water pump (37); a rotary solenoid twin valve (31) that provides the delivery of the water (17) from the water pump (9) to the water cooling chamber (11) or the beverage cooling chamber (12); a water inlet of the rotary solenoid twin valve (32) that the water (17) enters through with the water pump (9) located inside the water cooling chamber (11) at the time of first and interim cooling of the device and also a first water outlet of the rotary solenoid twin valve (33) that provides the water's exit; a second water outlet of the rotary solenoid twin valve (34) that provides the exit of the water (17) received from the water pump (9) located inside the water cooling chamber (11) at the time of cooling of the beverage (13); a 12 V DC rotary solenoid (rotating) (35) that enables the rotary solenoid twin valve (31) to turn right or left; the ozone generator (26) and a UVC LED lamp (Ultraviolet C) (36) that provide water sterilization; at least one water filter of the water overflow barrier (38) that holds dust and particles in the water; a gas carrier copper pipe (39) that provides the transmission of the refrigerant within the compressor (refrigerating gas compressor) (18) to the condenser (heat remover) (20); a bottom water intake slit of the water overflow barrier (40) that provides the discharge of the water flooding from the water filter of the water overflow barrier (38) by flowing downwards to the water cooling chamber (11); a LED illumination lamp (41) that is located on the beverage cooling chamber (12) and illuminates when the cooling procedure is started; a silicone water discharge hose (42) that plays a role in water discharge; a turning shaft of the rotary solenoid (45); voltage control cables (46); a water outlet hole of the beverage cooling chamber (48) that provides the start of the discharge of water which passes through a water inlet hose of the beverage cooling chamber (47) to the beverage cooling chamber (12); a back side of the device (49) that provides protection from behind to the device; and a capillary tube that has a role to reduce the pressure.

### Modus operandi of the invention:

In the rapid cooling device for beverages (13), the 220 V AC supply cable (23) is plugged into the 220 V AC power socket (24) located on the back side of the device (49); and then the device is turned on by pressing on the turn on/off switch of the device (6). The green ready LED lamp (43) and the blue water LED lamp (44) that are located on the front panel (1) of the device flash. The buzzer (7) gives a beep sound at certain intervals. At this stage, the top cover of the device (2) is opened and the device is filled with 42 I of water (17). When 42 I of water (17) is poured into the device, the water level sensor (14) sends a signal to the electronic control card (22) indicating that the water (17) level is sufficient. At that moment, the buzzer (7) located on the front panel (1) of the device stops beeping, the blue water LED lamp (44) on the front panel (1) stops flashing and illuminates continuously. After this stage, the device starts the cooling procedure; and so the electronic control card (22) initiates the operation of the compressor (refrigerating gas compressor) (18) and the condenser fan (21), the refrigerant inside the compressor (refrigerating gas compressor) (18) moves, respectively, through the gas carrier copper pipe (39), the condenser (heat remover) (20), and the capillary tube (pressure reducer) (50) and then arrives at and moves inside the coil heat exchanger (cooler) (19) located in the water cooling chamber (11) to provide the cooling of the water (17) in the water cooling chamber (11) down to 1-2°C. The temperature sensor (NTC) (16) determines the time of activation and deactivation of the compressor (refrigerating gas compressor) (18) and the condenser fan (21) by sending a temperature signal to the electronic control card (22) and provides the fixation of the water (17) temperature between 1 - 2°C. Additionally, the water pump (9) located under the water cooling chamber (11) is also active; it takes the water (17) from the water inlet of the water pump (10) to the water outlet of the water pump (37) and through the connector flexi hose (30) to the water inlet of the rotary solenoid twin valve (32). The electronic control card (22) sends a command to the 12 V DC rotary solenoid (rotating) (35) on the rotary solenoid twin valve (31) to open the first water outlet of the rotary solenoid twin valve (33); the 12 V DC rotary solenoid (rotating) (35) turns to the right via the turning shaft of the rotary solenoid (45) and thereby opens the first water outlet of the rotary solenoid twin valve (33); the water (17) exits from the first water outlet of the rotary solenoid twin valve (33) and constantly circulates inside the water cooling chamber (11) and thus prevents the coil heat exchanger (cooler) (19) from being covered in ice and provides homogenous transmission of cooling energy of the coil heat exchanger (cooler) (19) to the water (17) inside the water cooling chamber (11). This process continues until the temperature of the water (17) reaches 1 - 2°C. When the temperature of the water (17) reaches 1 - 2°C, the temperature sensor (NTC) (16) detects this and conveys it to the electronic control card (22); the electronic control card (22) then stops the operation of the compressor (refrigerating gas compressor) (18), the condenser fan (21), and the water pump (9) and so the green ready LED lamp (43) flashing on the front panel (1) starts illuminating continuously and also the buzzer (7) gives a long beep sound indicating that the device is ready to cool beverages (13). It takes 40-60 minutes from the time it is first turned on till it is ready to cool. The above-mentioned modus operandi of the device applies not only to the initial turn-on of the device but also the interim cooling procedure which happens when the cooling water (17) of the device becomes warm.

The rotary solenoid twin valve (31) inside the water cooling chamber (11) transfers the water (17) to the water cooling chamber (11) during the initial turn-on of the device and the interim (cooling) procedure performed due to the warming of the water (17). During the beverage cooling procedure, on the other hand, it transfers the water (17) to the beverage cooling chamber (12).

To cool beverages, the top cover of the device (2) is opened and the beverages (13) are placed vertically in the beverage cooling chamber (12); then, cooling time is set between 1 to 9 minutes using the time control button (8) on the front panel (1), and the cooling procedure is started by pressing the start/stop button (4). The time information entered from the front panel (1) is conveyed to the electronic control card (22), the program installed to the electronic control card (22) starts running and provides the fulfilment of the following functions:

The water pump (9) starts functioning; the cool water (17) inside the water cooling chamber (11) is received from the water inlet of the water pump (10) and sent to the water outlet of the water pump (37), and it passes through the connector flexi hose (30) and arrives at the water inlet of the rotary solenoid twin valve (32). Simultaneously, the electronic control card (22) sends a command to the 12 V DC rotary solenoid (rotating) (35) on the rotary solenoid twin valve (31) to open the second water outlet of the rotary solenoid twin valve (34); the 12 V DC rotary solenoid (rotating) (35) turns to the left via the turning shaft of the rotary solenoid (45) and thereby opens the second water outlet of the rotary solenoid twin valve (34). After that, the water (17) passes through the water inlet hose of the beverage cooling chamber (47) and exits from the water outlet hole of the beverage cooling chamber (48), thereby filling into the beverage cooling chamber (12). The water (17) floods from the water filter of the water overflow barrier (38) once its level reaches the top of the water overflow barrier (15), and then it flows downwards to the water cooling chamber (11) by passing through the bottom water intake slit of the water overflow barrier (40). The water filter of the water overflow barrier (38) holds dust and particles in the water (17). Until the cooling time is over, the water (17) is circulated as such, and the water (17) that warms because of the beverages (13) in the beverage cooling chamber (12) is re-cooled in the water cooling chamber (11). The LED illumination lamp (41) located on the beverage cooling chamber (12) illuminates when the cooling procedure is started; the ozone generator (26) starts functioning and generates ozone gas, and the ozone carrying hose (27) carries the generated ozone gas to the water cooling chamber (11) and thereby ensures the disinfection of water. Simultaneously, the UVC LED lamp (Ultraviolet C) (36) also illuminates and provides the disinfection of water. While the cooling procedure continues, the display (5) on the front panel (1) shows the countdown of cooling time; seeing the number 1 thereon means the cooling procedure is about to end.

When the cooling procedure is completed: The electronic control card (22) stops the operation of the compressor (refrigerating gas compressor) (18), the condenser fan (21), the water pump (9), the ozone generator (26), and the UVC LED lamp (Ultraviolet C) (36). The water (17) inside the water cooling chamber (11) passes through the water discharge hole of the beverage cooling chamber (29) and exits from the water outlet hole of the beverage cooling chamber (48), thereby filling into the water cooling chamber (11) located at the bottom. When the water (17) discharge procedure in the beverage cooling chamber (12) is completed, the buzzer (7) on the front panel (1) gives a long beep sound indicating that the cooling procedure is over. Following this step, the users can take the cooled beverages (13) from the beverage cooling chamber (12) without their hands touching the water (17).

In the present invention, when the water (17) in the rapid cooling device for beverages (13) needs changing, the water is discharged from the device by opening the water discharge valve (25) connected to the silicone water discharge hose (42).

## Claims

1. A rapid cooling device for beverages (13) providing the rapid cooling of the beverages (13), and its feature is that it comprises at least one beverage cooling chamber (12) cooling the beverages (13) placed therein, a water pump (9) providing the circulation of the cooling water (17) inside the device, a rotary solenoid twin valve (31) providing the delivery of the water (17) from the water pump (9) to the water cooling chamber (11) or the beverage cooling chamber (12), a coil heat exchanger (cooler) (19) providing the cooling of water, at least one water cooling chamber (11) containing the cooling water (17) therein, a 12 V DC rotary solenoid (rotating) (35) enabling the rotary solenoid twin valve (31) to turn right or left, a water level sensor (14) determining the water level, an ozone generator (26) and a UVC LED lamp (Ultraviolet C) (36) providing water sterilization, at least one water filter of the water overflow barrier (38) holding dust and particles in the water, and an electronic control card (22) containing the working and control schedule of the device.

2. An invention as in Claim 1, and its feature is that it has a rotary solenoid twin valve (31) providing the exit of the water (17) received from the water pump (9) located inside the water cooling chamber (11) from a first water outlet of the rotary solenoid twin valve (33) during the first and interim cooling of the device and providing its exit from a second water outlet of the rotary solenoid twin valve (34) during beverage (13) cooling procedure.

3. An invention as in Claims 1 or 2, and its feature is that it has a 12 V DC rotary solenoid (rotating) (35) and a turning shaft of the rotary solenoid (45) turning the rotary solenoid twin valve (31) to the right to open the first water outlet of the rotary solenoid twin valve (33) and turning it to the left to open the second water outlet of the rotary solenoid twin valve (34).

4. An invention as in Claim 1, and its feature is that it has at least one beverage cooling chamber (12) providing the cooling of the beverages (13) placed therein, and containing a water overflow barrier (15) allowing the water (17) therein to overflow after a certain level and leak into the water cooling chamber (11), a water outlet hole of the beverage cooling chamber (48) providing the entry of the water (17), a water discharge hole of the beverage cooling chamber (29) providing the discharge of the water (17) inside the beverage cooling chamber (12) to the water cooling chamber (11) at the bottom upon the completion of the beverage (13) cooling procedure.
